# EUROPEAN PATENT APPLICATION

(11) **EP 1 686 725 A1**
(43) Date of publication of application: **02.08.2006**
(21) Application number: 05027875.3
(22) Date of filing: 20.12.2005
(51) Int. Cl.: H04L 12/24, G06F 9/00

(54) **Configuration management system and method using representative object instances**

(30) Priority: 01.02.2005 KR 2005009290
(71) Applicant: Samsung Electronics Co., Ltd., Suwon-si, Gyeonggi-Do (KR)
(72) Inventor: Im, Yong-Sik, Seocho-gu Seoul (KR)
(74) Representative: Lang, Johannes

(57) **Abstract**

A configuration management system and method uses representative object instances which serve to call information about unregistered object instances through a representative object instance in order to enable positive node management (including generation, deletion, change and retrieval). In the apparatus of the invention, during initialization of a managed system, an agent stores initialization information about system configuration as object information, and generates a representative object instance representing the object information. Upon receiving an object call from a network management system (NMS) manager, the agent performs a command for a called object through the representative object instance, and forwards a result of the command to the NMS manager.

## Description

### BACKGROUND OF THE INVENTION

### Technical Field

The present invention relates to a configuration management system and method using representative object instances and, more particularly, to a system and method which serve to call information about unregistered object instances through a representative object instance in order to enable positive node management (including generation, deletion, change and retrieval).

### Related Art

Common Object Request Broker Architecture (hereinafter referred to as CORBA) is a standard specification established by Object Management Group (OMG) for the purpose of implementing distributed object computing. Using CORBA facilitates the development of application programs for distributed computing, and enables communication among distributed objects irrespective of programming language. Thus, a client can communicate with a server regardless of the programming language of CORBA.

The introduction of CORBA has enabled direct calling and data transmission among objects. According to the concept of CORBA for inter-object calling, it is possible to call a corresponding object after creating and sharing Inter-operable Object References (IORs) by which respective computers can read and interoperate, or performing a registration process through a CORBA service such as a naming service.

According to a managed object standard defined for the purpose of managing a network, all managed objects are not registered in IOR or a naming service so that some of the managed objects are not directly called or cannot be called in some instances. In particular, configuration managed objects may confront such a case since they contain massive system node information, and system nodes and lower attribute nodes (such as configuration information) of respective systems may be added, deleted or changed in real-time. In addition, if scope and filter conditions are given in inter-object calling, it becomes more difficult to use direct calling.

According to a currently operated Network Management System (NMS), a higher manager fetches information about resources of a managed system (e.g., a wired or wireless system) through an intermediate agent, sends a command to the managed system through the agent if necessary, or receives various messages from the managed system through the agent. In order to perform such functions, the agent manages physical/logical information of the system, such as construction, malfunction, connection and statistics, by shaping the information according to a concept of managed objects. Communication technologies (e.g., CMIP, CORBA and SNMP) which are based upon various protocols may be used between the manager and the agent to transmit various data. In this case, an agent operating in CORBA is adapted to objectify some objects required for management according to a CORBA standard while transmitting data through inter-object communication to a manager and an ORB terminal.

In order to directly access an instance of a counterpart between different versions, the CORBA environment requires a process of registering information (e.g., reference and name) about the corresponding instance in an IOR file or a CORBA naming service. However, if there are a number of instances, or the instances are frequently added or deleted, it is difficult to register and call all instance information, respectively.

Accordingly, 3GPP TS 32.603 has proposed an approach which defines an object called BasicCmIrpOperations to fetch information of all instances. However, this process has drawbacks in that all calling has to be made through BasicCmIrpOperations, and several call commands when made simultaneously have to be processed in sequence.

### SUMMARY OF THE INVENTION

The present invention has been developed to solve the foregoing problems, and it is therefore an object of the present invention to provide a configuration management system and method using representative object instances which can call information about unregistered object instances through a representative object instance in order to positively manage nodes.

According to an aspect of the invention for realizing the above objects, there is provided an object management system using representative object instances in a network, comprising: an agent adapted, in initialization of a managed system, to store initialization information about system configuration as object information, and to generate a representative object instance representing the object information, and upon receiving an object call from a manager of network management system (NMS), to perform a command for a called object through the representative object instance and forward a result of the command to the NMS manager.

The agent preferably includes: an unregistered object DB storing unregistered object information of objects that are not registered in a naming service in use for inter-object communication; an application program adapted, upon receiving an object call from the NMS manager, to approach the unregistered object DB through the representative object instance to perform the command for a called object; and a system interface for interfacing with the managed system.

The application program preferably comprises a user program that actually implements inter-object relation or motion defined by an Interface Definition Language (IDL).

The unregistered object information stored in the unregistered object DB is preferably in the form of a structured linked list.

The unregistered object information preferably contains configuration information stored in Mo_Node and respective attribute information about the configuration information stored in Mo_Attribute.

The initialization information comprises at least one of System information, Rack information, Shelf information, Slot information and Board information.

The System information is stored in the unregistered object DB according to attribute information defined as EquipmentR1 class.

The Rack information, the Shelf information and the Slot information are stored in the unregistered object DB according to attribute information defined as EquipmentHolder class.

The Board information is stored in the unregistered object DB according to attribute information defined as CircuitPack class.

The agent is adapted, upon receiving a GET operation command about the object information from the NMS manager, to search the unregistered object DB through the representative object instance, and to transmit searched result information of the called object to the NMS manager.

The agent is adapted to additionally register the result information of the object searched from the unregistered object DB in a hash table.

The agent is adapted to, upon receiving a SET operation command about the object information from the NMS manager, to search the unregistered object DB through the representative object instance, to change information about the called object, and to transmit result information to the NMS manager.

The agent is adapted to additionally register the changed result information of an object searched from the unregistered object DB in a hash table.

The information registered in the hash table is in the form of a structured linked list.

The agent is adapted, in malfunction or status change of the managed system, to change information of a corresponding object, and to transmit the changed information to the NMS manager through an event.

The agent is adapted to find an instance satisfying filter conditions requested by the manager from instances searched according to DN information in the execution of the operation command.

The filter conditions comprise at least one of calculation conditions, comparison conditions and containment conditions.

The agent is adapted, when making a command in the execution of the operation command, to designate a range to be searched and a representative object instance according to scope information.

The scope information comprises at least one of type information and level information.

According to an aspect of the invention for realizing the above objects, there is provided an object management method using a representative object instance in a network, the method comprising the steps of: storing initialization information about managed system configuration as object information; generating a representative object instance representing the object information; and, upon receiving an object call, forwarding a result value according to a command about an object called through the representative object instance.

The object management method further comprises the step of, when the command about the object called through the representative object instance is a GET command, forwarding a GET result.

The GET result forwarding step comprises: inquiring as to an object related with the representative object instance; storing a GET result of the inquired object; and forwarding the GET result of the inquired object.

The object management method further comprises the step of adding the inquired object information to a hash table after forwarding the GET result of the inquired object.

The object management method further comprises the step of, when the command about the object called through the representative object instance is a SET command, forwarding a SET result.

The step of forwarding the SET result comprises: inquiring as to object related with the representative object instance; changing an attribute value of the inquired object; forwarding the changed attribute value; and forwarding the SET result of the inquired object.

The object management method further comprises the step of adding the inquired object information to a hash table after forwarding the changed attribute value.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein:
FIG. 1 illustrates an example of a GET operation for instances registered in a naming service according to network management standards (3GPP);
FIG. 2 illustrates an example of a SET operation for instances registered in a naming service according to network management standard (3GPP);
FIG. 3 illustrates an example of a GET operation for instances which are not registered in a naming service according to network management standards (3GPP);
FIG. 4 illustrates an example of a SET operation for instances which are not registered in a naming service according to network management standards (3GPP);
FIG. 5 is a block diagram of a network including a Common Object Request Broker Architecture (CORBA) agent and actual network elements;
FIG. 6 illustrates an exemplary configuration initialization file according to the invention;
FIG. 7 is a view defining a DB table structure according to the invention;
FIG. 8 is a view defining a hash table structure according to the invention;
FIG. 9 is a view defining an attribute of a representative object instance EquipmentR1 class that shapes the managed system according to the invention;
FIG. 10 is a view defining a method of a representative object instance EquipmentR1 class that shapes the managed system according to the invention;
FIG. 11 is a view defining an attribute value type of a representative object instance EquipmentR1 that shapes the managed system according to the invention;
FIG. 12 a view defining an attribute of a representative object instance EquipmentHolder class that shapes the managed system according to the invention;
FIG. 13 a view defining an attribute of a representative object instance CircuitPack class that shapes the managed system according to the invention;
FIG. 14 is a flowchart of an initialization process according to the invention;
FIG. 15 is a block diagram of a CM containment tree of initialization information;
FIG. 16 is a flowchart of a process for receiving respective node information obtained from an initialization file, classifying received node information as element data according to node types, and storing classified data in the form of a linked list;
FIG. 17 is a flowchart of a GET operation for instances according to the invention;
FIG. 18 is a flowchart of a SET operation for instances according to the invention;
FIGS. 19 and 20 are flowcharts of a GET operation according to the invention;
FIGS. 21 and 22 are flowcharts of a SET operation according to the invention;
FIG. 23 is a flowchart of a process for inquiring a hash table according to the invention;
FIGS. 24A, 24B and 25 are flowcharts of a process for generating hash numbers according to the invention; and
FIG. 26 is a flowchart of a process for adding a hash table according to the invention.

### DETAILED DESCRIPTION OF THE INVENTION

The following detailed description will present preferred embodiments of the invention in conjunction with the accompanying drawings. For reference, the same or similar reference signs are used to designate corresponding parts throughout several views. In the following detailed description, well-known functions or elements will not be described in detail if they unnecessarily obscure the concept of the invention.

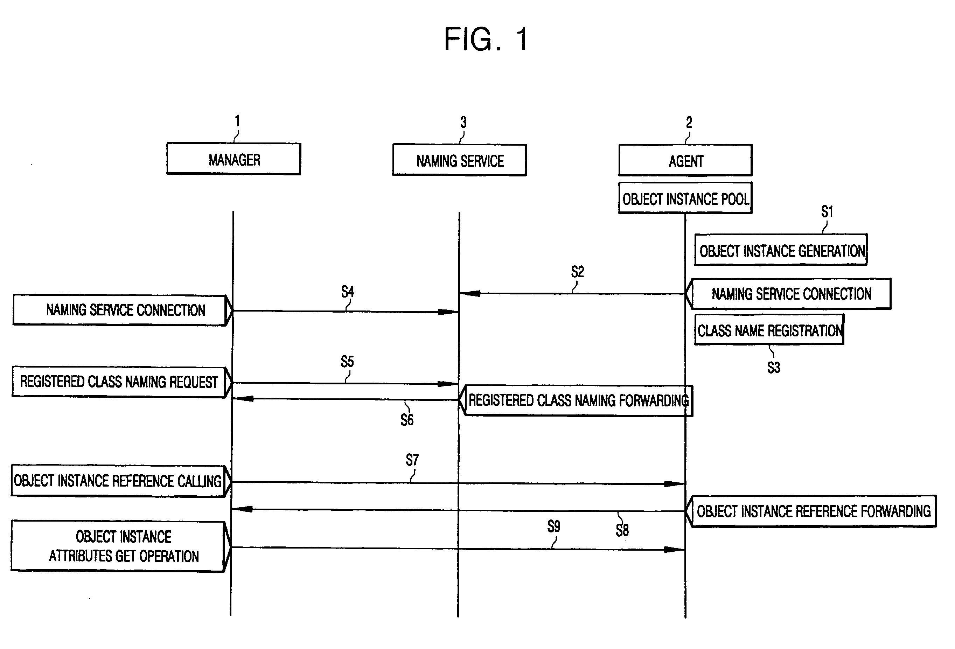

FIG. 1 illustrates an example of a GET operation for instances registered in a naming service according to network management standards (3GPP).

As shown in FIG. 1, when a manager 1 and an agent 2 are embodied in two separate equipments in a CORBA platform, the manager 1 can approach an instance of the agent 2, which is formed from an actual managed object, via ORB in order to get desired information or execute a method. In this case, all objects have to be registered in a naming service 3 when they are generated, and the agent 2 assigns unique IDs to objects via a CORBA Object Adaptor, such as a Portable Object Adaptor (POA) or a Basic Object Adaptor (BOA), and manages the same. In addition, an object instances' pool indicates instances which are registered at the moment that they are realized.

That is, the agent 2 generates an instance in S1, and connects with the naming service 3 in S2 to register class names in S3. When the manager 1 connects with the naming service 3 in S4 and requests the registered class names in S5, the naming service 3 forwards the registered class names to the manager 1 in S6.

Then, when the manager 1 calls the reference of the instance from the agent 2 in S7, the agent 2 forwards the reference of the called instance to the manager in S8. Then, in S9, the manager 1 performs a GET operation with respect to attributes of the instance with the agent 2.

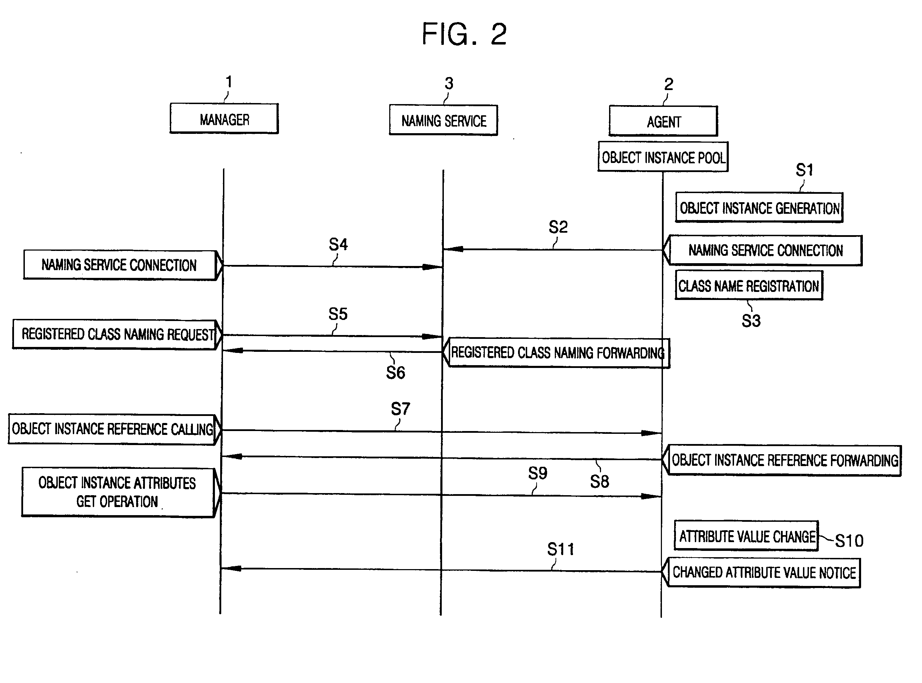

FIG. 2 illustrates an example of a SET operation for instances registered in a naming service according to network management standards (3GPP).

As shown in FIG. 2, the agent 2 generates an instance in S1, and connects with the naming service 3 in S2 to register class names in S3. When the manager 1 connects with the naming service in S4 and requests the registered class names in S5, the naming service 3 forwards the registered class names to the manager 1 in S6.

Then, when the manager 1 calls the reference of the instance from the agent 2 in S7, the agent 2 forwards the reference of the called instance to the manager 1 in S8. When the manager 1 responds by sending a request to the agent 2 to change attributes of the instance in S9, the agent 2 changes the values of the attributes in S10 and sends the changed values of the attributes to the manager 1 in S 11.

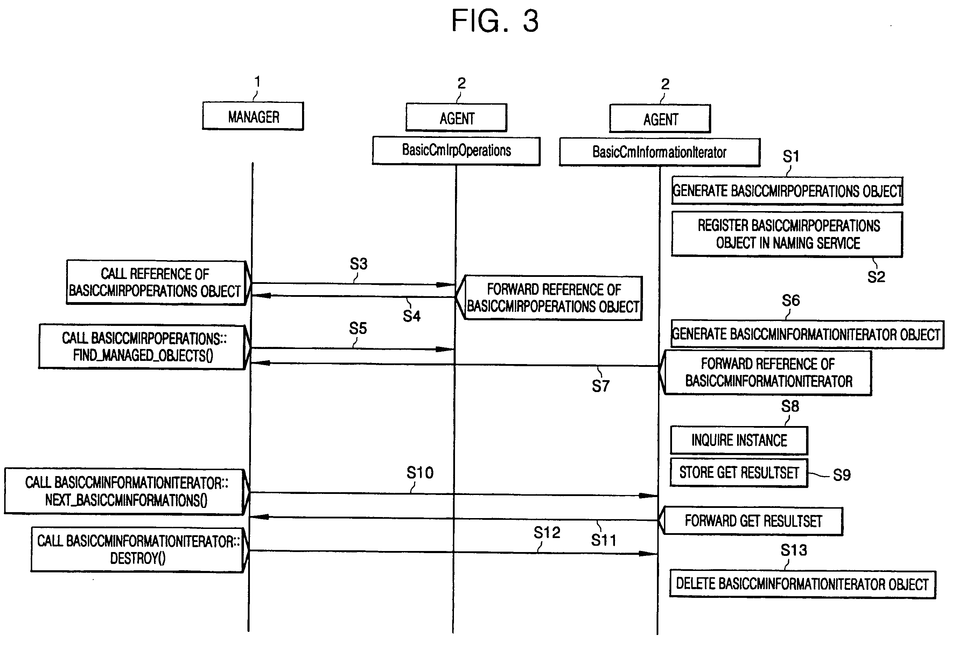

FIG. 3 illustrates an example of a GET operation for instances which are not registered in a naming service according to network management standards (3GPP).

As shown in FIG. 3, the agent 2 produces a BasicCmIrpOperations instance defined (e.g., as BasicCmIRPSystem.idl) according to 3GPP. The manager 1 fetches the reference of the object and then calls a find_managed_objects or modify_managed_objects method. Then, as the agent 2 generates BasicCmInformationIterator and stores a corresponding result thereto, the manager 1 takes the reference of the object again.

That is, the agent 2 generates a BasicCmIrpOperations object in S1 and registers the BasicCmIrpOperations object to the naming service in S2. When the manager 1 calls the agent 2 for the reference of the BasicCmIrpOperations object in S3, the agent 2 forwards the reference of the BasicCmIrpOperations object to the manager 1 in S4.

The manager 1 calls the agent 2 for find_managed_objects defined by the BasicCmIrpOperations manager in S5, and the agent 2 generates a BasicCmInformationIterator object in S6 and forwards the reference of the BasicCmInformationIterator object to the manager 1 in S7. Then, the agent 2 finds the called object and stores the result in S8 and S9.

Accordingly, when the manager 1 calls the agent 2 for next_basicCmImformations() defined by BasicCmInformationIterator object in S 10, the agent 2 forwards the stored GET result to the manager 1 in S11. Subsequently, when the manager 1 calls the agent 2 for destroy() defined by the BasicCmInformationIterator object in S12, the agent 2 deletes the BasicCmInformationIterator object in S13.

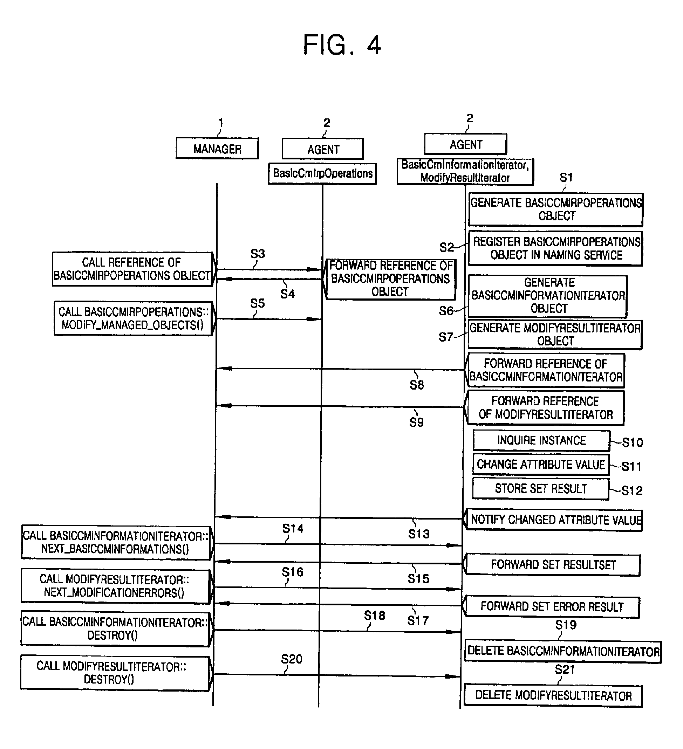

FIG. 4 illustrates an example of a SET operation for instances which are not registered in a naming service according to network management standards (3GPP).

As shown in FIG. 4, the agent 2 generates a BasicCmIrpOperations instance in S1 and registers the BasicCmIrpOperations instance to the naming service in S2. When the manager 1 calls the agent 2 for the reference of the BasicCmIrpOperations object in S3, the agent 2 forwards the reference of the BasicCmIrpOperations object to the manager 1 in S4.

The manager 1 calls the agent 2 for find_managed_objects defined by the BasicCmIrpOperations manager in S5, and the agent 2 generates a BasicCmInformationIterator object and a ModifyResultIterator object in S6 and S7 and forwards the references of the BasicCmInformationIterator and ModifyResultIterator objects to the manager 1 in S8 and S9. Then, the agent 2 finds the called objects, changes values of the called objects, and stores changed results in S10 to S12. In addition, the agent 2 forwards the changed attribute values to the manager 1 in S 13.

Accordingly, when the manager 1 calls the agent 2 for next_basicCmImformations() defined by BasicCmInformationIterator in S 14, the agent 2 forwards a stored result to the manager 1 in S 15.

Subsequently, when the manager 1 calls the agent 2 for next_modificationErrors() defined by ModifyResultIterator in S16, the agent 2 forwards a stored error value to the manager 1 in S 17.

Then, when the manager 1 calls the agent 2 for destroy() defined by BasicCmInformationIterator in S18, the agent 2 clears BasicCmInformationIterator in S 19.

After that, when the manager 1 calls the agent 2 for destroy() defined by ModifyResultIterator in S20, the agent 2 clears ModifyResultIterator in S21.

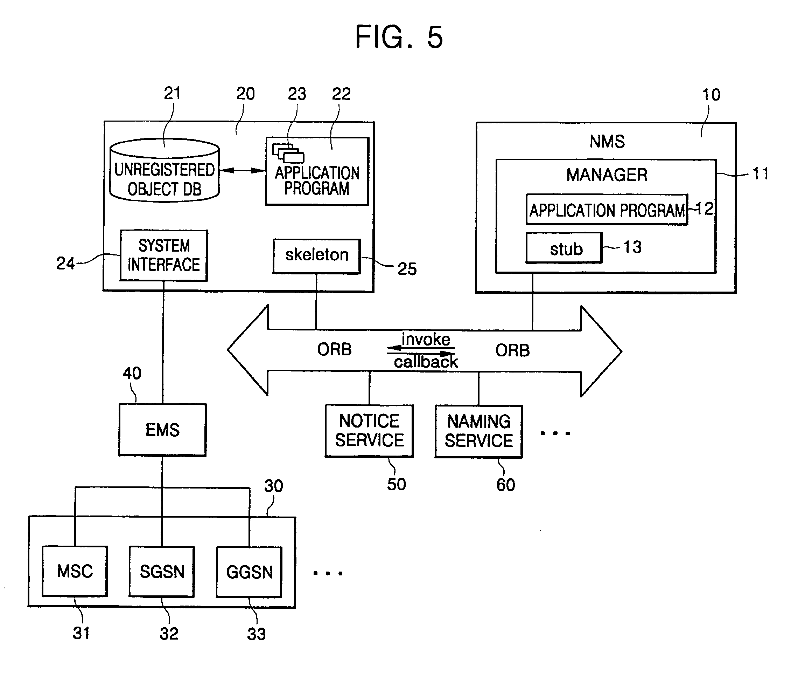

FIG. 5 is a block diagram of a network including a CORBA agent and actual network elements (e.g., NMS, EMS, WCDMA system and so on), in which data transmission under a CORBA platform (stub, skeleton, IOR, ORB, invoke/callback, Naming Service, Notification Service and so on) is substantially the same as a common CORBA server/client structure.

As shown in FIG. 5, the invention generally includes a Network Management System (NMS) 10, a CORBA agent 20 and managed systems 30.

The NMS 10 is an integrated network management system managed by a communication service operator, and includes a CORBA manager 11, an application program 12 and a stub 13.

The CORBA manager 11 functions as an NMS adaptor between the NMS 10 and the CORB agent 20 for supporting communication through CORBA ORB.

The CORBA agent 20 serves as an intermediary between the NMS 10 and the managed systems 30, and functions as a CORBA server as well as an agent in a network management structure.

That is, the CORBA agent 20 performs CORBA-associated processes, including operation, alarm/status even (or notification) and so on, with the CORBA manager 11 of the NMS 10, and inter-operates with the managed systems 30 in a lower layer.

In particular, in system initialization, the CORBA agent 20 shapes the configuration and status of each exchange system into an instance (instance generation), and registers object data to be managed by the CORBA manager 21 through a naming service 60. During system operation, the COBRA agent 20 sends a command, such as GET, SET, CREATE, DELETE and so on, to the system through invocation of the NMS 10.

In addition, the CORBA agent 20 reflects the result of the command from the system to the internal configuration object, calls it back to the NMS 10, and reports changed status, alarm, etc. to a higher NMS through an event service function.

The CORBA agent 20 includes an unregistered object DB 21, an application program 22, a representative object instance 23, a system interface 24 and a skeleton 25.

The unregistered object DB 21 stores managed information in the form of an object (e.g., an unregistered object instance). That is, although registration by the naming service 60 and the like is required for inter-object communication through CORBA ORB, unregistered objects are stored instead.

The application program 22 is a user program that actually implements objects and inter-object relations defined by Interface Definition Language (IDL).

Moreover, the application program 22 has a representative object instance 23 for connection between the CORBA manager 11 of the NMS 10 and the managed objects so that the CORBA manager 11 can directly access the objects.

The system interface 24 provides interfacing with the managed systems 30 (including MSC 30, SGSN 32 and GGSN 33) through an Elementary Management System (EMS) 40 in order to monitor and operate the system status in a local network.

The skeleton 25 and the stub 13 are codes generated by an IDL interface, which application terminals inherit in order to embody objects.

As indicated above, the agent 20 of the invention fetches all system information (such as physical structure, local structure and connection information) through system initialization. That is, the agent 20 constructs and manages the system information obtained from initialization files as CORBA instances. If an object is directly called by the manager 11, its reference is registered by the naming service 60. Any object information which is not registered is managed in the form of a structured linked list (DB table), and then a representative object instance of the unregistered object information is generated.

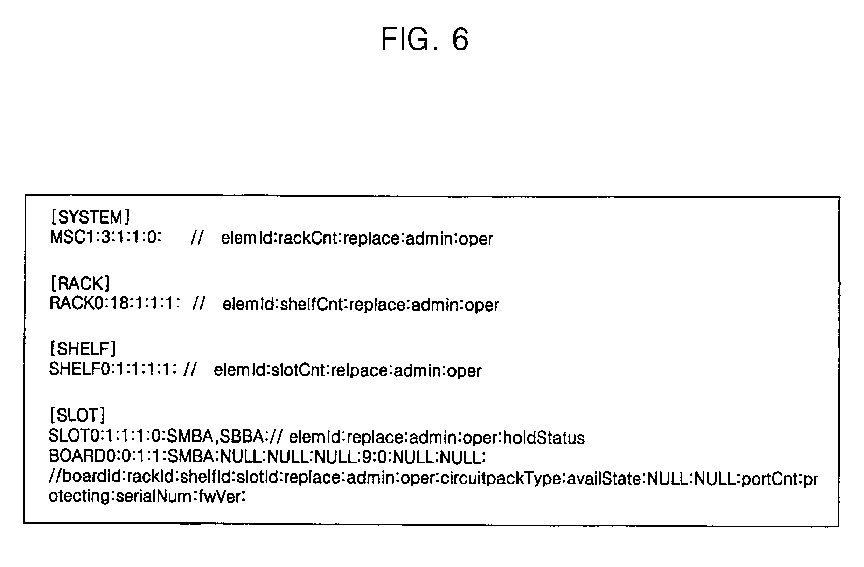

Reference will now be made to FIG. 6, which illustrates an exemplary configuration initialization file according to the invention.

Referring to FIG. 6, the agent detects a configuration information file of a switch from the system in initialization. The configuration initialization file includes system, Rack, Shelf and Slot information. For example, system information is MSC1:3:1:1:0: // elemld:rackCnt:replace:admin:oper, Rack information is Rack0:18:1:1:1: // elemld:shelfCnt:replace:admin:oper, Shelf information is SHELF0:1:1:1:1: // elemld:slotCnt:replace:admin:oper, Slot information is SLOT0:1:1:1:0:SMBA,SBBA// elemld:replace:admin:oper:holdStatus, and Board information is BOARD0:0:0:1:1:SMBA:NULL:NULL:9:0:NULL:NULL://boardld:rackld:sh elfld:slotld:replace:admin:oper:circuitpackType:availState:NULL:NULL:port Cnt:protecting:serialNum:fwVer:.

That is, system/Rack/Shelf/Slot information is stored in Mo_Attributes of the DB table according to attribute information which directs system information to EquipmentR1 class, Rack, Shelf and Slot information to EquipmentHolder class, and Board information to CircuitPack class. Parameters of the configuration initialization structure according to fields are shown in Table 1 below.

**Table 1>**

| Field | Description |
|---|---|
| elemld | system, rack, shelf, slot ID |
| rack(/shelf/slot)Cnt | rack(/shelf/slot) count |
| replace | replaceable state |
| admin | administrative state |
| oper | operational state |
| holdStatus | holder status |
| rack(/shelf/slot)Id | board position, rack(/shelf/slot)ID |
| circuitpackType | circuitpack type. |
| availState | availability state |
| portCnt | in-board port count |
| portecting | dualized state |
| serialNum | serial number |

As seen in Table 1, "elemId" designates ID according to system, rack, shelf and slot, and "rack(/shelf/slot)Cnt" designates rack(/shelf/slot) count. "Replace" means replaceable state, and "admin" means administrative state; "oper" means operational state;"holdStatus" means holder status; "rack(/shelf/slot)Id" means board position and rack(/shelf/slot) ID; "circuitpackType" means circuit-pack type; "availstate" means availability state; "portCnt" means inboard port count; "portecting" means a dualized state; and "serialNum" means serial number. In addition, "fwVer" designates firmware version.

In the meantime, the agent stores an instance, related to configuration information which is not registered in the naming service, in a DB table during system initialization and operation. The instance is stored in the form of a structured data list as shown below.

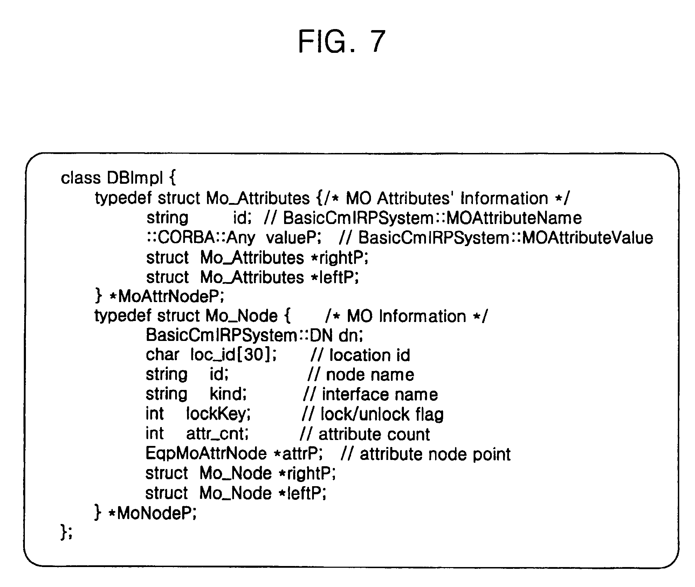

FIG. 7 is a view defining a DB table structure according to the invention. During system initialization, the agent stores data in the DB table in the following fashion.

Configuration information, such as system, Rack, Shelf, Slot and Board information, is stored in "Mo_Node," and respective attributes are stored in "Mo_Attributes" in the form of a linked list (in which data areas are assigned and set, and their data are queued and stored one by one in the form of a list). "Mo_Node" also stores information in the form of a linked list since there are several system configurations. Furthermore, "rightP" and "leftP" are information for maintaining a point relation with a list stored in the right and left of corresponding data.

Node names, such as system name, rack name, shelf name, slot name, and board name, are stored in "id" of "Mo_Node," and respective Ids thereof are stored in "kind," while "lockKey" is used as a flag to prevent data from being accessed while being corrected, and "attr_cnt" means the total number of respective attributes.

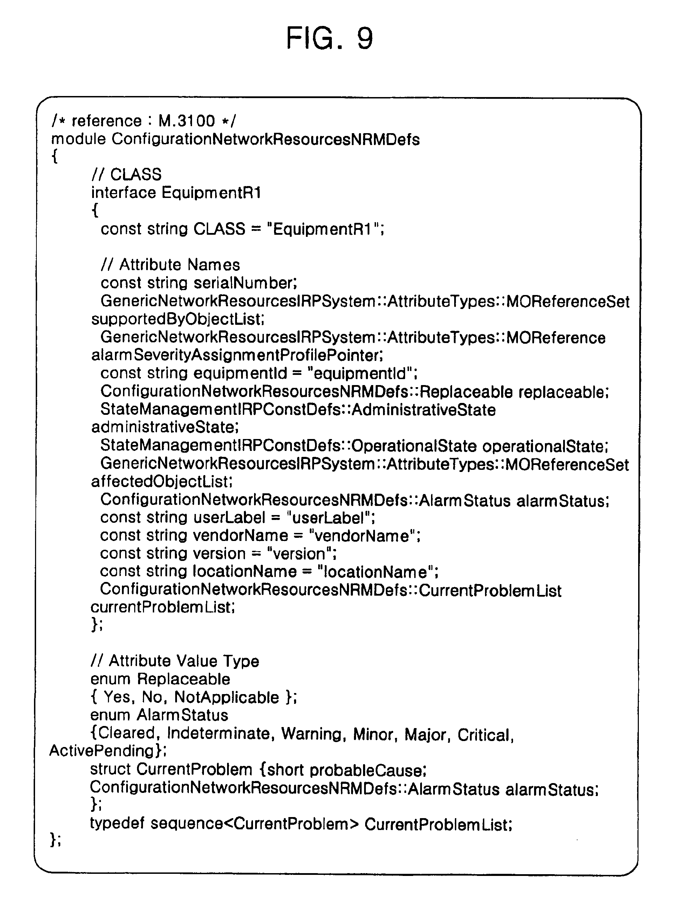

Attributes are possessed by respective configuration objects defined by FIGS. 9 to 13, and stored one by one in "Mo_Attributes," while attribute names defined by IDLs in FIGS. 9 to 13 are stored in "Mo_Attributes", and values according to the attributes (e.g., values of replace, admin, oper, and so on read by initialization files) are stored in "valueP." "CORBA::Any" means a type called "Any" of data types defined by CORBA, and this type can express all data types.

After the completion of initialization, the agent operates as follows according to a request from the manager and system status.

The agent searches a hash table and a DB table through a called representative object instance within a GET operation for object information from the manager, and transmits its result. That is, if not found in the hash table, the agent searches the DB table and additionally registers its result in the hash table.

In addition, the agent receives a SET operation concerning object information from the manager, searches the hash table and the DB table through the called representative object instance, changes information about a corresponding instance, and transmits its result and event. Also, in this case, if a result is not found in the hash table, the agent searches the DB table and additionally registers its result in the hash table.

In the event that malfunction or status change takes place in the managed system, the agent changes information about a corresponding instance, and transmits corresponding information to the manager via EVENT (or Notification).

In a GET/SET operation, the agent designates a range to be searched according to scope information (type, level), and sends a command by designating a representative object instance.

In the GET/SET operation, the agent also selects any of the instances found according to DN information that satisfies filter conditions (calculation conditions, comparison, containment relation, and so on) requested from the manager.

In addition, the agent stores contents relative to node information having an access history by means of GET/SET in a structured data list as follows. In accordance with the invention, the data list is named a "hash table." This is a structure produced by mapping original data with hash table information through the application of a hashing algorithm in order to enhance search rate for repeated access to a corresponding node.

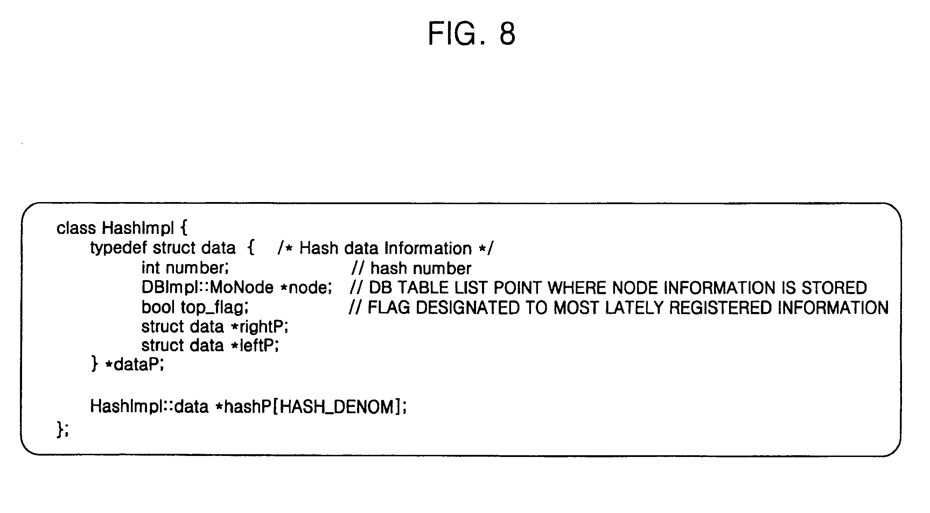

FIG. 8 is a view defining a hash table structure according to the invention.

Referring to the hash table structure as shown in FIG. 8, "int number" designates hash number, and "DBImpl::Monode *node;" designates DB table list point where node information is stored. In addition, "bool top_flag" designates a flag that is assigned to the most lately registered information.

In the invention, representative object instance (EquipmentR1, EquipmentHolder, CircuitPack) is defined (e.g., as ConfigurationNetworkRe-sourcesNRMDefs.idl) as equal with class name defined in standard ITU-T M.3100 (Generic Network Information Model), and internally-defined attributes, except for self-defined data (StateManagementIRPConstDefs.idl) and method (ConfigurationNetworkResourcesNRMDefs.id1), comply with standards (TS 32.623, TS 32.300, and so on). A detailed description will now be provided with reference to FIGS. 9 to 13.

FIG. 9 is a view defining (e.g., as ConfigurationNetworkResourcesNRMDefs.idl) an attribute of a representative object instance EquipmentR1 class that shapes the managed system according to the invention.

As shown in FIG. 9, EquipmentR1 class is a representative object instance for managing information about system nodes, and defined contents are generally classified into attribute names and attribute value types.

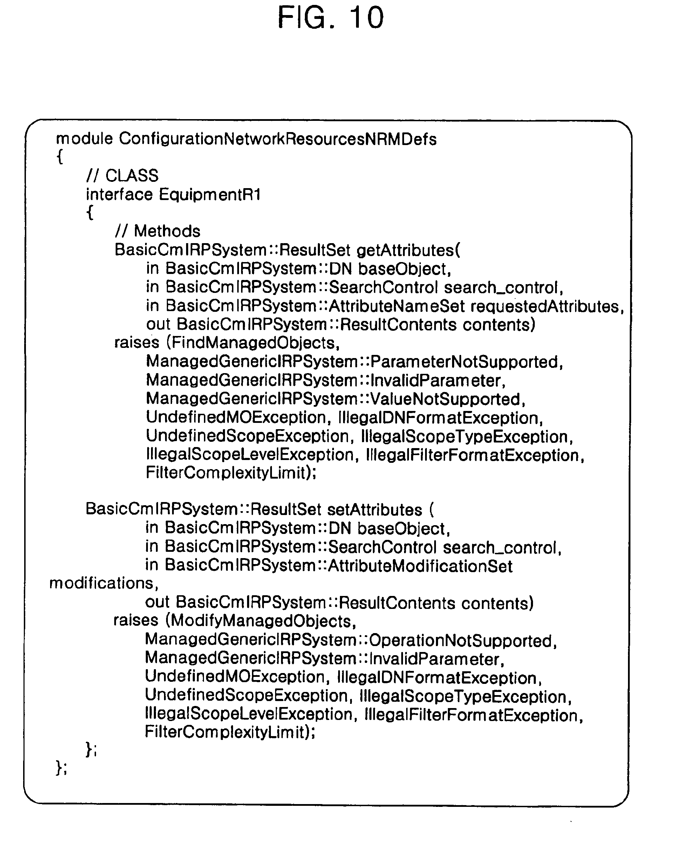

FIG. 10 is a view defining (e.g., as ConfigurationNetworkResourcesNRMDefs.idl) a method of a representative object instance EquipmentR 1 class that shapes the managed system according to the invention.

As shown in FIG. 10, when the manager sends an access call command to an object subject to GET or SET, the agent forwards the reference of the representative object instance (e.g., EquipmentR1, EquipmentHolder and CircuitPack) to the manager. Then, the manager can call a getAttribute and setAttribute method in the object again so as to perform a GET or SET operation with respect to the information of a desired instance node.

In this case, the manager merely needs naming information and reference relative to the representative object instance without requesting naming information or reference relative to several instances, and the agent merely performs embodiment and naming service registration for the representative object instance. When the above function is called, the agent searches for a result in an internal database (e.g., DB table and hash table) and forwards the result to the manager.

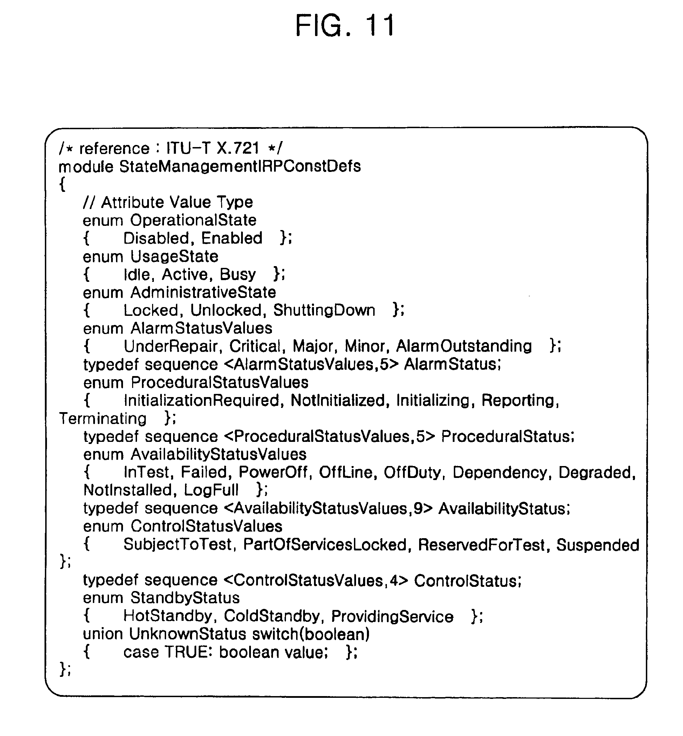

FIG. 11 is a view defining (e.g., as StateManagementIRPConstDefs.idl) an attribute value type of a representative object instance EquipmentR1 class that shapes the managed system according to the invention.

As shown in FIG. 11, this defines a value type of an attribute self-defined by the agent.

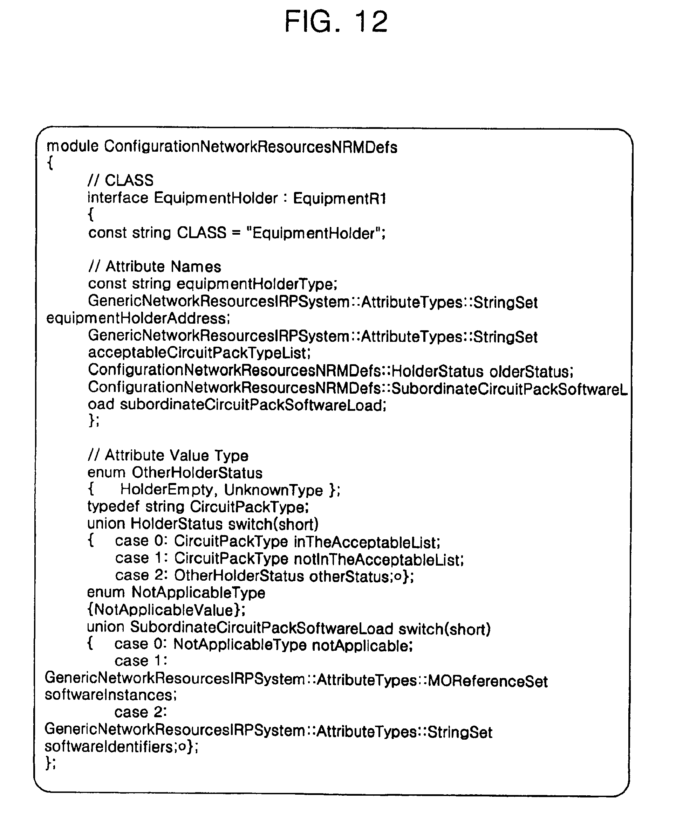

FIG. 12 a view defining (e.g., as ConfigurationNetworkResourcesNRMDefs.idl) an attribute of a representative object instance EquipmentHolder class that shapes the managed system according to the invention.

As shown in FIG. 12, EquipmentHolder class inherits EquipmentR1 class to provide getAttribute and setAttribute functions, and an additional attribute is defined as seen in FIG. 12. Defined contents are generally classified into attribute names and attribute value types.

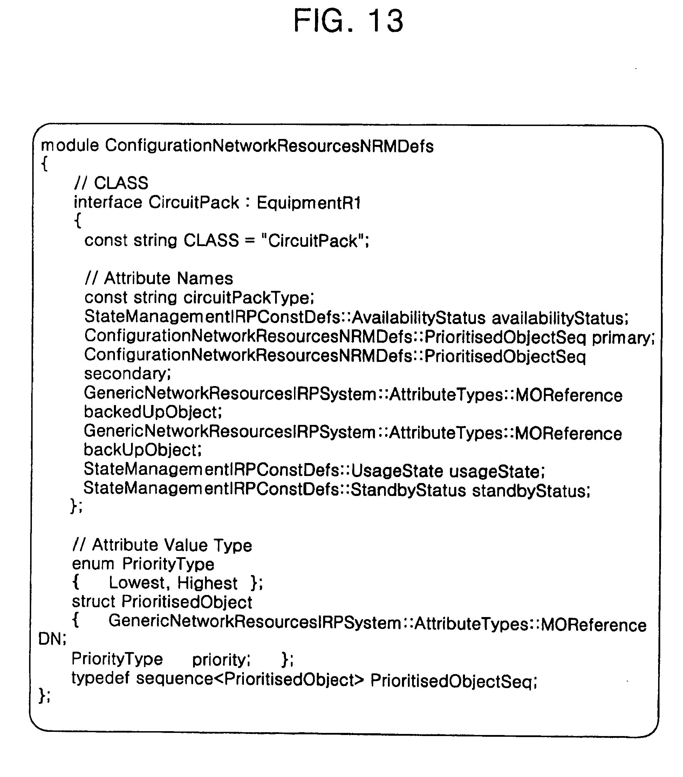

FIG. 13 is a view defining (e.g., as ConfigurationNetworkResourcesNRMDefs.idl) an attribute of a representative object instance Circuit-Pack class that shapes the managed system according to the invention.

As shown in FIG. 13, CircuitPack class inherits EquipmentR1 class and provides getAttribute and setAttribute functions, and additional attribute is defined as seen in FIG. 13. Defined contents are generally classified into attribute names and attribute value types.

In addition, the invention provides a realization method for a GET/SET operation including scope and filter conditions.

If an entire DN is given to instance GET or the scope type is base-only, it is confirmed whether or not filter conditions are satisfied while a table is searched, and then a satisfactory instance is returned. If the given DN is not an entire DN, that is, the scope type is not base-only, a number of instances satisfying filter conditions are returned while a search is performed up to the end of nodes.

In addition, the invention enhances the GET/SET performance rate. That is, since hashing rules are primarily defined and the internal DB table is searched after the hash table, the search rate for managed objects can be enhanced. This can be made available and used as a search table in the case of reflecting internal status, such as alarm, and may obtain better results when the probability of the GET/SET operation is higher. Table 2 below shows data resulting from an experiment applied to an actual system via an agent of the invention, in which performance rates in the execution of instance GET operations are compared (unit: tps(transaction per second)).

**<Table 2>**

| Data (number) | Single version | | Different version | |
|---|---|---|---|---|
| | (1) Conven- | (2) Inventive | (3) Conventional | |
| SYSTEM (4) | 198.52 | 252.31 | 91.76 | 92.12 |
| RACK (8) | 168.91 | 248.52 | 65.58 | 72.11 |
| SHELF (18) | 160.77 | 225.10 | 64.18 | 71.18 |
| SLOT (429) | 65.47 | 214.70 | 56.95 | |
| BOARD (242) | 99.01 | 200.01 | 51.96 | |

As seen in Table 2 above, it is apparent that the instance GET performance rate for respective component data is faster than the common performance rate in both single and different versions.

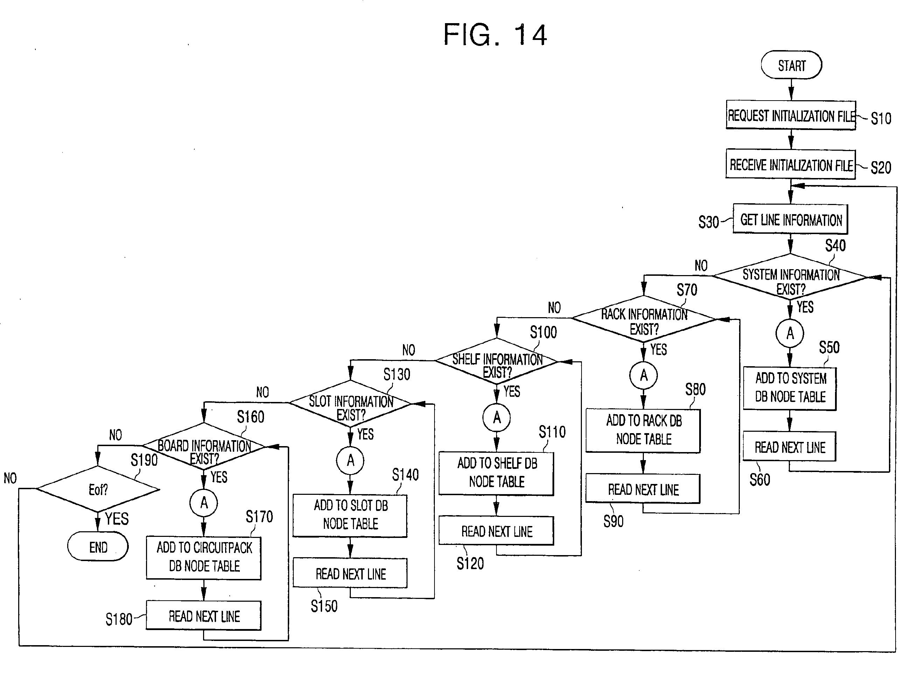

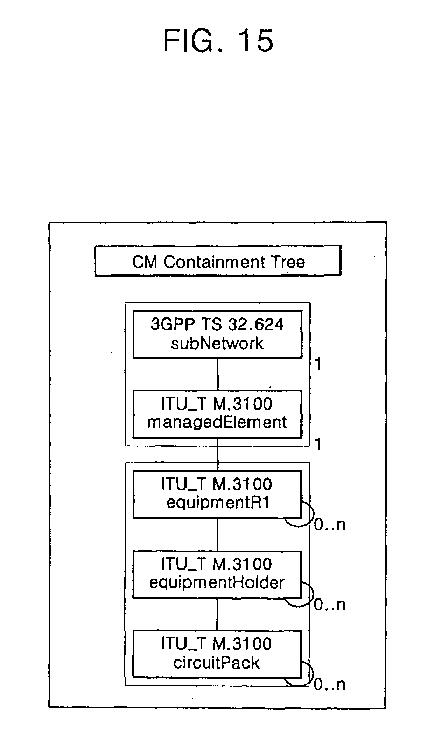

FIG. 14 is a flowchart of an initialization process according to the invention, and FIG. 15 is a block diagram of a CM containment tree of initialization information.

As shown in FIG. 14, the agent during initialization requests an initialization file from the system in S 10, and receives the initialization file therefrom in S20.

The agent reads the initialization file information lines one by one to get information in S30, and determines whether this information contains any data about system information in S40. If system information exists, the agent generates a system DB node so as to add the generated system DB node to a system DB node table in S50, and then reads the next lines in succession in S60.

However, if system information does not exist, the agent determines whether any information about Rack exists in S70. If Rack information exists, the agent generates Rack DB nodes one by one so as to add the generated Rack DB nodes to a Rack DB table in S80, and then reads the next lines in succession in S90.

If Rack information does not exist, the agent determines whether any information about Self exists in S100. If Shelf information exists, the agent generates Shelf DB nodes one by one so as to add the generated Shelf DB nodes to a Shelf DB table in S 110, and then reads the next lines in succession in S120.

However, if Shelf information does not exist, the agent determines whether any information about Slot exists in S130. If Slot information exists, the agent generates Slot DB nodes one by one so as to add the generated Slot DB nodes to a Slot DB node table in S 140, and then reads the next lines in succession in S 150.

If Slot information does not exists, the agent determines whether any information about Board exists in S160. If Board information exists, the agent generates Board DB nodes one by one so as to add the generated Board DB nodes to a CircuitPack DB node table in S 170, and then reads the next lines in succession in S 180.

However, if Board information does not exist, the agent determines whether it is the end of the initialization file (EOF) in S190. If it is the EOF, the initialization process terminate; if not, the agent reads the lines of the file and gets information in order to repeat the afore-described process.

Thus, the initialization is completed after the DB nodes about System, Rack, Shelf, Slot and Board are generated by repeating the above process.

The above initialization information is stored in a DB table in the form of configuration management data having a CM containment tree as shown in FIG. 15, which is a block diagram of a CM containment tree of initialization information.

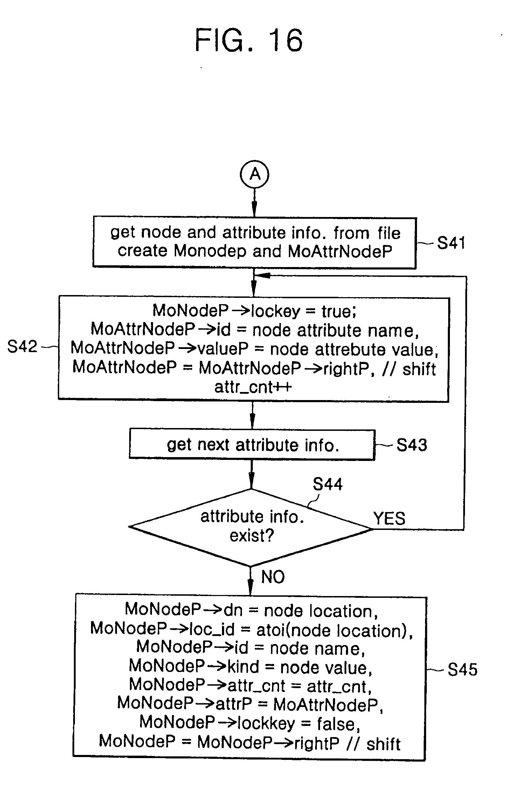

In particular, node generation according to the above node types (System, Rack, Shelf, Slot and CircuitPack) will be obtained according to a process as shown in FIG. 16.

FIG. 16 is a flowchart of a process for receiving respective node information obtained from an initialization file, classifying received node information as attribute data according to node types (System, Rack, Shelf, Slot and CircuitPack), and storing classified data in the form of a linked list according to the invention. This amounts to DB table information.

As shown in FIG. 16, attribute values of respective configuration nodes are first obtained according to lines from the file, converted according to data types defined in FIGS. 9 to 13, which are obtained by mapping attributes defined by standard (M.3100) according to IDL, and then continuously stored in the form of a linked list in MoAttrNodeP in S41 to S44.

In succession, when attribute information is created, all information about nodes (dn, loc_id, id, kind, attr_cnt, attrP, lockKey) is generated. In this case, MoAttrNodeP data as attribute information of nodes, which is created in a previous process, are stored in attrP item in MoNodeP in S45. (dn : Distinguished Name, naming rule for physical location, id : Node identification number, kind : Node value, attr_cnt : Node's attribute count, attrP : Node's attribute info., lockKey : key for locking node data)

Parameters of MoNode and MoAttrNode of the DB table will not be described since their meanings are the same as indicated in the above description of FIG. 7.

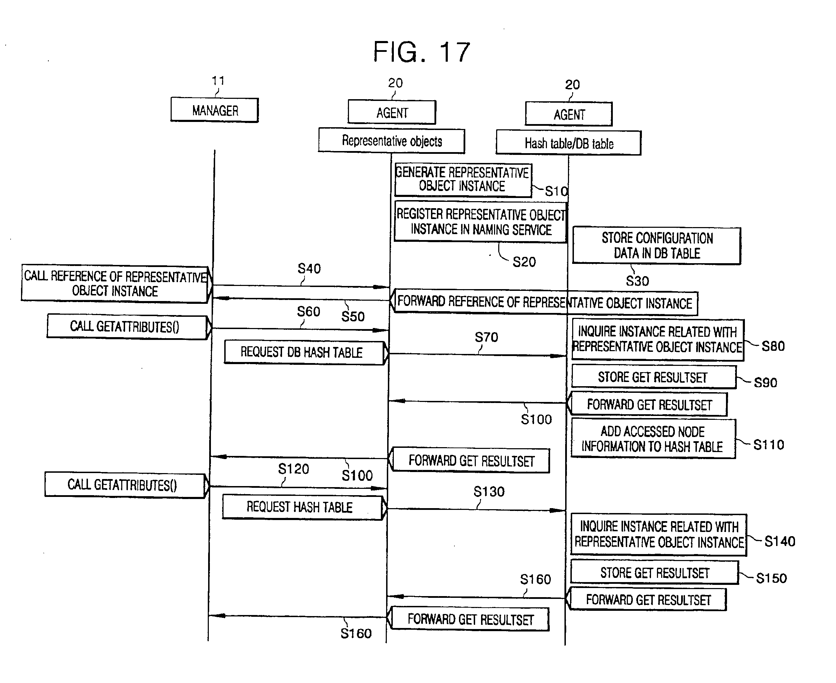

FIG. 17 is a flowchart of a GET operation for instances according to the invention, which can implement GET/SET for instances registered in a naming service in accordance with network management standard (3GPP), as well as for those which are not registered in the naming service.

As shown in FIG. 17, at system initialization, the agent 20 first generates representative object instances (EquipmentR1, EquipmentHolder and CircuitPack) in S10 and registers the representative object instances in the naming service in S20. Then, all configuration data are stored in a DB table S30.

After that, the manager 11 calls the references of the representative object instances in S40, and the agent 20 forwards the references of the representative object instances to the manager 11 in S50.

Then, the manager 11 fetches the callable references of the representative object instances registered in the naming service at initialization from the agent, and then calls getAttributes() defined in the representative object instances in S60.

Accordingly, the agent 20 requests a DB hash table in use for inquiry in S70, and thus inquires as to instances related to the representative object instances in S80.

The agent 20 stores results of the inquiry (GET resultSet) in S90, and then forwards GET resultSet to the manager 11 in S100.

In S110, the agent 20 adds the accessed node information to information in a hash table.

Then, the manager 11 calls getAttributes() defined in the representative object instances again in S120, and the agent 20 requests a hash table in use for inquiry in S 130 so as to inquire as to instances related to the representative object instances in S140.

The agent 20 stores the results of the inquiry (GET resultSet) in S 150, and forwards GET resultSet to the manager 11 in S160.

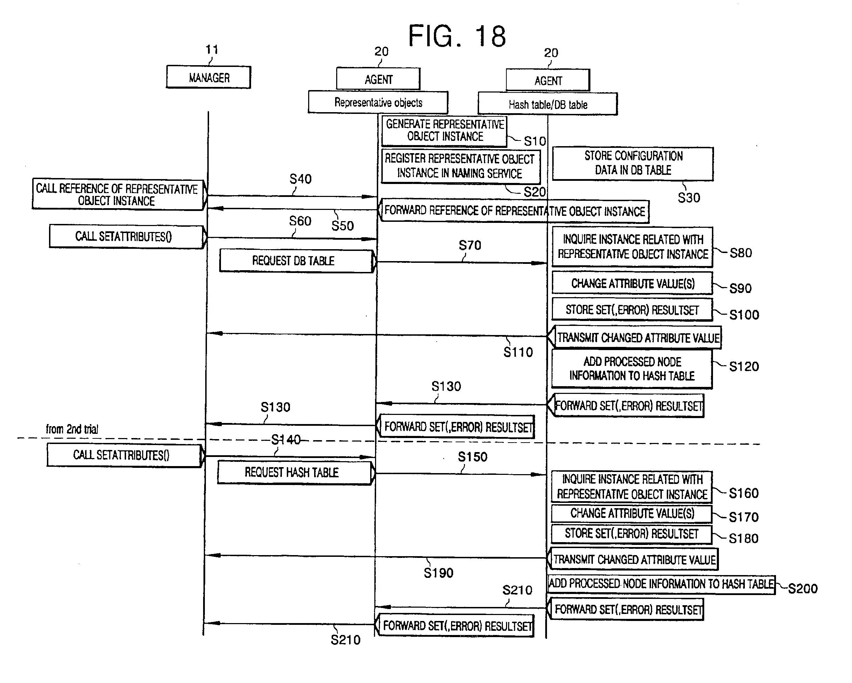

FIG. 18 is a flowchart of a SET operation for instances according to the invention, which can implement GET/SET for instances registered in a naming service by network management standard (3GPP), as well as for those which are not registered in the naming service.

As shown in FIG. 18, at system initialization, the agent 20 generates representative object instances (EquipmentR1, EquipmentHolder and Circuit-Pack) in S10, and registers the representative object instances in the naming service in S20. Then, all configuration data are stored in a DB table in S30.

The manager 11 calls the references of the representative object instances in S40, and the agent 20 forwards the references of the representative object instances to the manager 11 in S50.

The manager 11 fetches the callable references of the representative object instances registered in the naming service in initialization, and calls setAttributes() defined in the representative object instances in S60.

In response, the agent 20 requests a DB table in use for inquiry in S70, and inquires as to instances related to the representative object instances in S80.

Then, the agent 20 changes attribute values in the DB table in S90, stores the changed results (SET(,err) resultSet) in S100, and transmits the changed attribute values to the manager 11 in S 110.

In S120, the agent 20 adds the access node information to information in a hash table.

When the manager calls setAttributes() defined in the representative object instances again in S140, the agent 20 requests a hash table in use for inquiry in S 150, and inquires as to instances related to the representative object instances in S160. If the instances are not found since they are not registered in the hash table, the agent 20 sends a request to the DB table again in order to inquire as to the instances related to the representative object instances in S160.

Then, the agent 20 changes the attribute values in the DB table in S170, stores the changed results (SET(,err) resultSet) in S180, and transmits the changed attribute values to the manager 11 in S 190.

In case of node information unregistered in the hash table and thus requested from the DB table, the agent 20 adds processed node information to information in the hash table in S200.

As described above, if node information desired by the manager 11 corresponds to a node without history in the hash table, the invention acquires this node information through a DB table, and transmits the result as to the representative object instances through an internal process GET/SET.

In case of the SET operation, corresponding notification is additionally transmitted to the manager 11, and the agent 20 also provides GET/SET functions about BasicCmlrpOperations defined (e.g., as BasicCmIRPSystem.idl) in accordance with 3GPP with respect to the unregistered instances. That is, when the manager 11 commands a BasicCmIrpOperations instance to perform the GET/SET operation, the BasicCmIrpOperations instance directly calls representative object instances. When the BasicCmIrpOperations instance searches the hash table and the DB table and stores its result in a generated iterator, the manager 11 accesses the iterator and takes its result in sequence. This embodiment also includes scope and filter functions defined (e.g., as BasicCmIRPSystem.idl) by 3GPP.

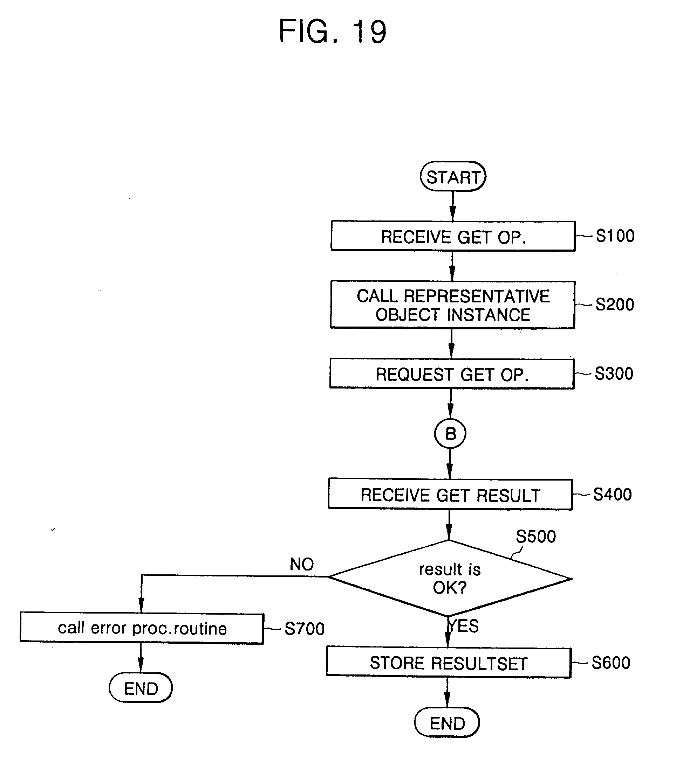

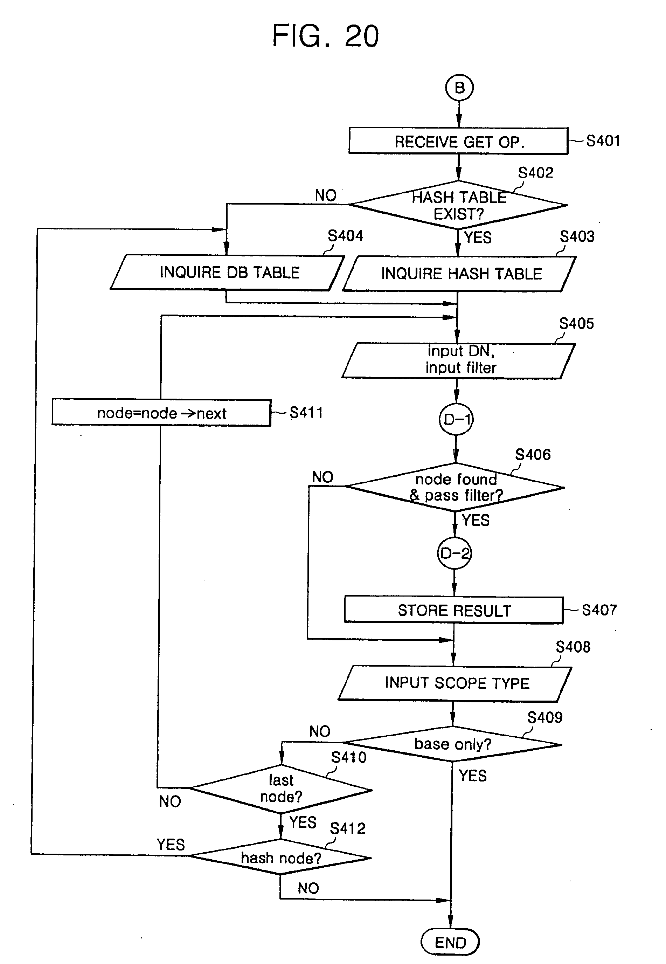

FIGS. 19 and 20 are flowcharts of a GET operation according to the invention.

As shown in FIG. 19, when the agent receives a GET operation from the manager in S100, the agent calls a representative object instance in S200, and requests a GET operation in S300. In this case, GET means a GET function and arguments defined by the CORBA standard (3GPP). The representative object instance represents configuration objects which are not registered in the naming service, and thus not directly called. The representative object instance is set to be called by an agent terminal in the execution of a GET/SET operation in accordance with the CORBA standard (3GPP) through BasicCmIrpOperations. With respect to the representative object instance, it is possible to access the DB table, search for desired node information, and collect results.

Accordingly, the agent receives a result about the GET operation in S400, and determines whether the result is normally obtained in S500. If the result is obtained normally, the agent stores the result (GET resultSet) in S600; if not, the agent performs a call error processing routine in S700.

In particular, if the GET operation is requested in the above process, the agent performs a process as shown in FIG. 20 to produce a result for the GET operation.

First, when the agent receives the GET operation in S401, the agent determines whether a hash table exists in S402. If the hash table exists, the agent inquires of the hash table in S403. If the hash table does not exist, the agent inquires of a DB table in S404. In this case, the DB table is a storage unit storing object information (e.g., class, attribute and DN) which is not registered, for example, by the naming service in agent initialization, and thus cannot be directly called by a CORBA ORB terminal. The hash table is a storage unit for managing searched nodes and information in the form of hash nodes, and a list in order to enhance search rate in the execution of the operation.

Then, the agent inputs DN information and filter information in S405, and searches for a node having corresponding DN information and desired attribute in the hash table in step D-1. If the node does not exist in the hash table, the agent searches the DB table for the node.

Then, after the search, the agent parses filter conditions contained in SearchControl information received from the manager, and confirms whether or not the corresponding node exists and an actual node attribute satisfies filter conditions as a result of the search in S406. The term "filter conditions" means conditions in the execution of the GET operation defined by the CORBA standard (3GPP).

If the corresponding node is found and the actual node attribute satisfies the filter conditions, the agent adds the searched node to the hash table in step D-2, stores a result in S407, and inputs scope type in S408. In this case, the result is obtained from the GET operation.

Then, the agent confirms whether or not scope conditions (type(=base-only, base and sub-tree, base-to-nth-level, base-all), level) are base-only in S409. If the scope conditions are other type instead of being base-only, a plurality of results may occur. Thus, in this case, the agent continues a search and confirms whether or not the node is the last node in S410. The term "scope" means scope conditions (type(=base-only, base and sub-tree, base-to-nth-level, base-all), level) in the execution of the GET operation defined by CORBA standard (3GPP).

If the node is not the last one, the agent moves to the next node (node = node→next) in S411. If the node is the last one, the agent confirms whether or not the last node is a hash node in S412. Since the hash node has a history that has not been searched yet, the agent performs the step of inquiring as to a DB node.

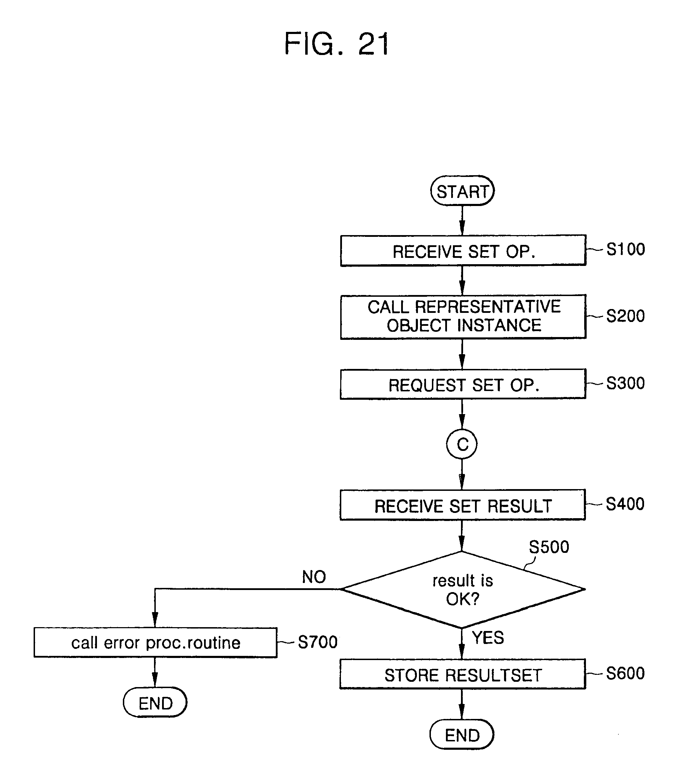

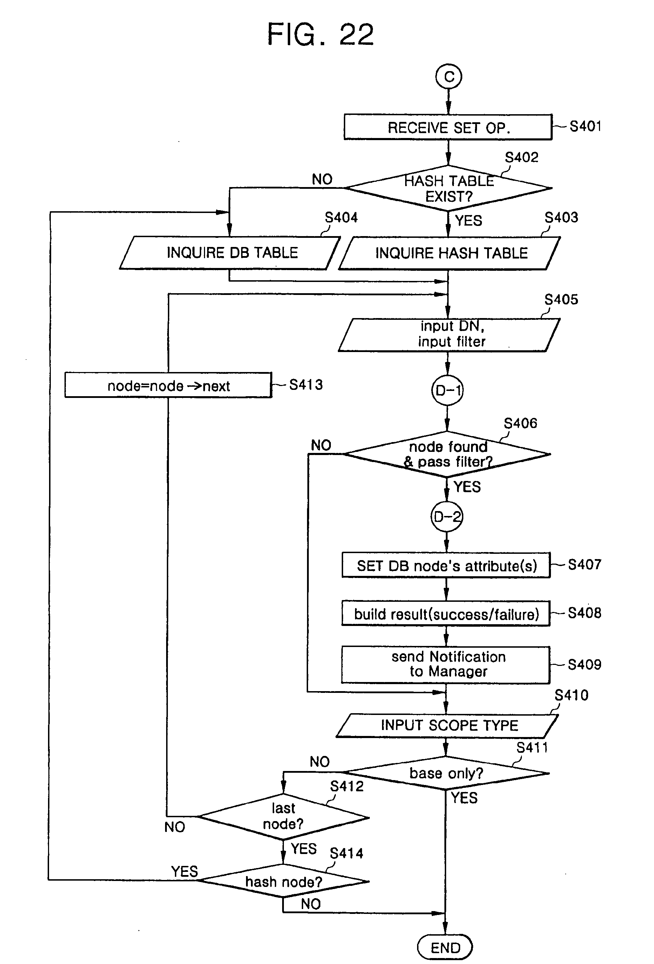

FIGS. 21 and 22 are flowcharts of a SET operation according to the invention.

As shown in FIG. 21, upon receiving a SET operation from the manager in S100, the agent calls a representative object instance in S200, and requests the SET operation in S300. Herein, "SET" means SET functions and arguments defined by the CORBA standard (3GPP). The representative object instance represents configuration objects which are not registered in the naming service, and thus not directly called. The representative object instance is set to be called by an agent terminal in the execution of a GET/SET operation by the CORBA standard (3GPP) through BasicCmIrpOperations. With the representative object instance, it is possible to access the DB table, search for desired node information, and collect results.

In response, the agent receives a result about the SET operation in S400, and determines whether the result is normally obtained in S500. If the result is normally obtained, the agent stores the result (SET resultSet) in S600. If the result is not normally obtained, the agent performs a call error processing routine in S700.

In particular, if the SET operation is requested in the above process, the agent performs a process in FIG. 22 as follows to obtain a result about the SET operation.

First, upon receiving the SET operation in S401, the agent determines whether a hash table exists in S402. If the hash table exists, the agent inquires of a DB table in S404. The DB table is a storage unit containing object information (such as class, attribute and DN) that is not registered by the naming service in initialization, with corresponding object not being directly called by a CORBA ORB terminal. The hash table is a storage unit made for the purpose of managing previously searched nodes and information in the form of hash nodes and their list in order to enhance search rate in operation.

The agent inputs DN information and filter information in S405, and determines whether a node having corresponding DN information and a desired attribute exists in the hash table in step D-1. If the node does not exist in the hash table, the agent searches the DB table.

Then, after the search, the agent parses filter conditions contained in SearchControl information received from the manager, and confirms whether the corresponding node exists and an actual node attribute satisfies filter conditions as a result of the search in S406. The term "filter conditions" means conditions in the execution of the GET operation defined by the CORBA standard (3GPP).

If the corresponding node is found and the actual node attribute satisfies the filter conditions, the agent adds the searched node to the hash table in step D-2.

Then, the agent changes the attribute of a DB node in S407, stores its result in S408, and notifies the manager of the change in S409. The term "result" means a result obtained through the SET operation.

After that, when scope type is inputted in S410, the agent determines whether scope conditions (type(=base-only, base and sub-tree, base-to-nth-level, base-all), level) are base-only in S411. If the scope conditions are another type instead of being base-only, a plurality of results may occur. Thus, in this case, the agent continues the search and confirms whether or not the node is the last node in S412. The term "scope" means scope conditions (type(=base-only, base and sub-tree, base-to-nth-level, base-all), level) in the execution of the GET operation defined by the CORBA standard (3GPP).

If the node is not the last node, the agent moves to the next node (node = node→next) in S413. If the node is the last one, the agent determines whether the last node is a hash node in S414. Since the hash node has a history that has not been searched yet, the agent performs a step of inquiring of a DB node.

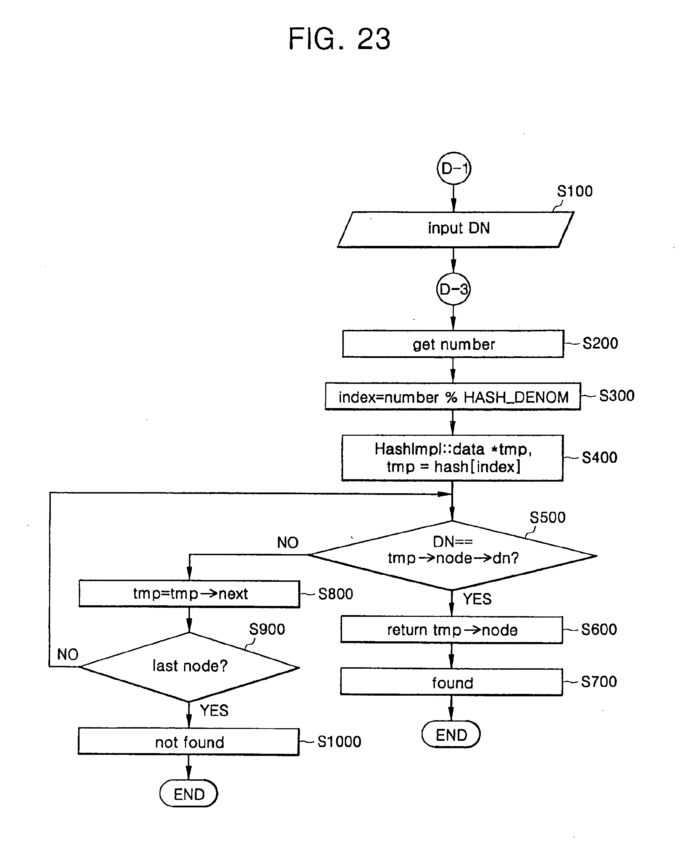

FIG. 23 is a flowchart of a process for inquiring of a hash table according to the invention.

As shown in FIG. 23, the agent receives DN information in S 100 so as to obtain a hash number as a key value for searching a hash table in S200, and calculates a hash table index from the DN information (index = number % HASH_DENOM) in S300.

Then, the agent proclaims a node point and gives information as to the hash table thereto (Hashlmpl::data*tmp, tmp = hash[index]) in S400.

In S500, the agent compares the input DN information with hash table DN information (DN = = tmp→node→dn ?). If the input DN information is the same as the hash table DN information, the agent gives the hash table DN information to the node point (return tmp→node) in S600 so as to find hash data of the hash table (found) in S700.

However, if the DN information is not the same as the DN information, the agent moves to the next node (tmp=tmp→next) in S800, and determines whether the corresponding node is the last node in S900. If the node is the last node, the agent fails to find the hash data in S1000. If the node is not the last node, the agent moves to the process for comparing the input DN information with the hash table DN information.

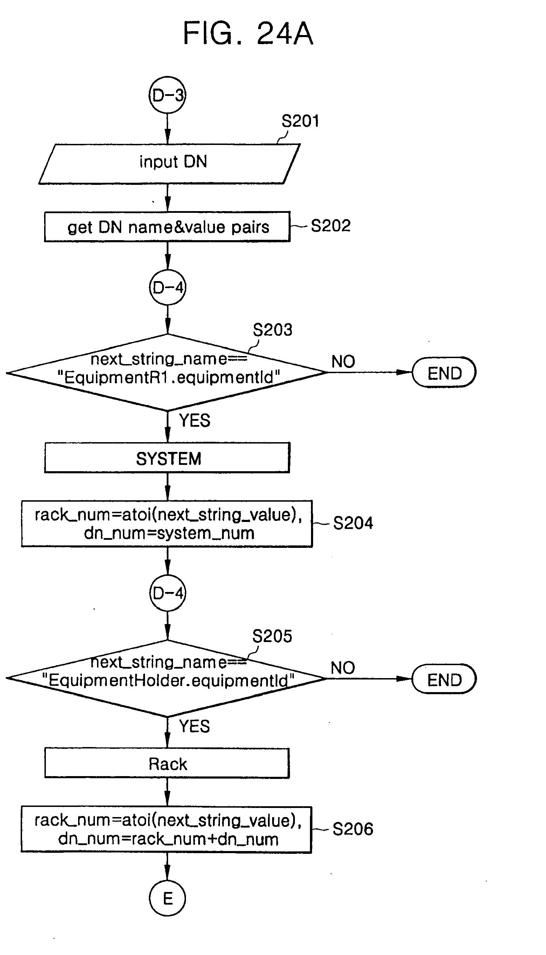

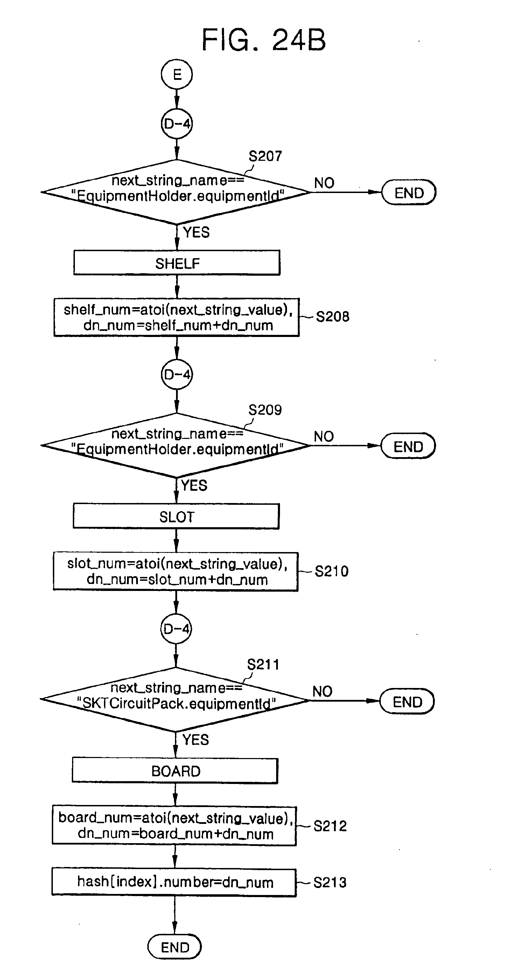

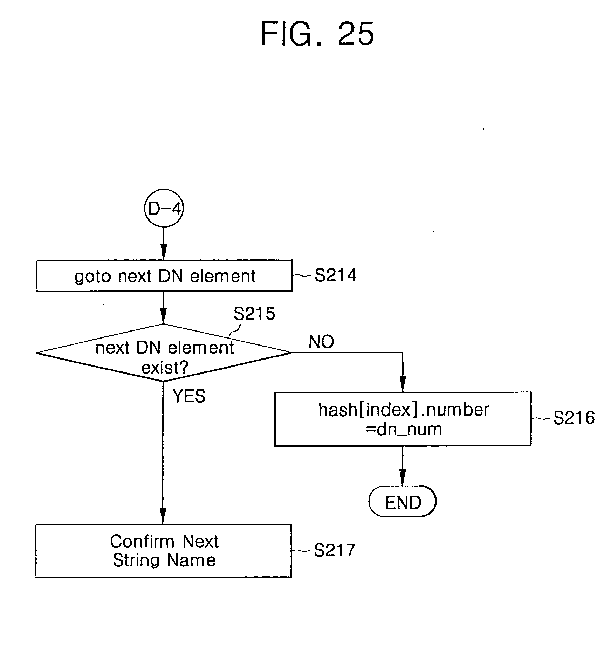

Now, the process of obtaining the hash number will be described in detail with reference to FIGS. 24A, 24B and 25.

FIGS. 24A, 24B and 25 are flowcharts of a process for generating hash numbers according to the invention.

As shown in FIG. 24A, the agent receives DN input in S201 to get a DN name and value pairs in S202, and confirms whether or not the next string name is "EquipmentR1.equipmentld" (next_string_name = "EquipmentR1.equipmentld") in S203.

If the next string name is "EquipmentR1.equipmentld" as a result of the confirmation, system number is set dn_num (rack_num = a-toi(next_string_value), dn_num = system_num) in S204.

Then, it is confirmed whether or not the next string name is "EquipmentHolder.equipmentld" (next_string_name = "EquipmentHolder.equipmentld") in S205. If the next string name is "EquipmentHolder.equipmentld", rack_num is added to previously set dn_num to obtain new dn_num (rack_num = atoi(next_string_value), dn_num = rack_num + dn_num) in S206.

Referring to FIG. 24B, in S207, it is confirmed whether or not the next string name is "EquipmentHolder.equipmentld" (next_string_name = "EquipmentHolder.equipmentld"). If the next string name is "EquipmentHolder.equipmentld", shelf_num is added to above dn_num to obtain new dn_num (shelf_num = atoi(next_string_value), dn_num = shelf_num + dn_num) in S208.

Then, it is confirmed whether or not the next string name is "EquipmentHolder.equipmentld" (next_string_name = "EquipmentHolder.equipmentld") in S209. If the next string name is "EquipmentHolder.equipmentld", slot_num is added to dn_num to obtain new dn_num (slot_num = atoi(next_string_value), dn_num = slot_num + dn_num) in S210.

In S211, it is confirmed whether or not the next string name is "SKTCircuitPack.equipmentld" (next_string_name = "SKTCircuit-Pack.equipmentld"). If the next string name is "SKTCircuit-Pack.equipmentld", board_num is added to above dn_num to obtain new dn_num (board_num = atoi(next_string_value), dn_num = board_num + dn_num) in S212.

Then, hash[index].number is generated by using finally obtained dn_num (hash[index].number = dn_num) in S213.

In this manner, the agent receives DN and converts it to a hash number to be stored in the hash table. According to conversion rules, existing ID information according to level is converted into integers and dn_num's obtained according to level are added up.

In particular, the process of adding dn_num, which is obtained according to level, is as shown in FIG. 25. That is, the agent moves to the next DN element (goto next DN element) in S214, and confirms whether or not the next DN element exists in S215. If the next DN element exists, the agent moves to a process for confirming the next string name in S217, and if the next DN element does not exist, the agent generates hash[index].number by using dn_num (hash[index] number = dn_num) in S216.

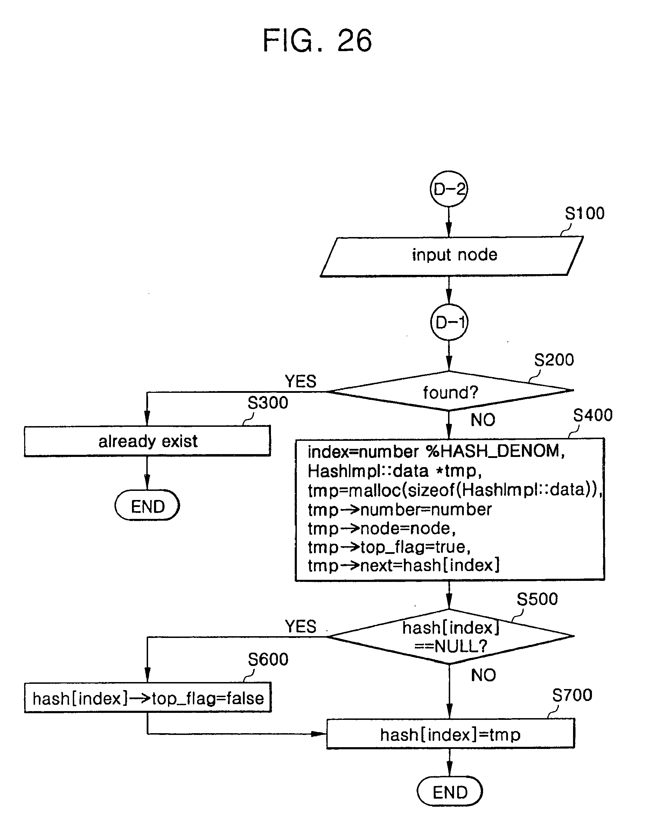

FIG. 26 is a flowchart of a process for adding a hash table according to the invention.

As shown in FIG. 26, the agent receives a node to be added in S100, and confirms whether or not the node has its information in the previous hash table through the hash table inquiring process as shown in FIG. 23 in S200. If the information already exists in the hash table in S300, the process for adding the hash table is terminated.

However, if information of the node to be added does not exist in the previous hash table, the node to be added is stored in a new hash table and a top flag of the node is set (index = number % HASH_DENOM, Hashlmpl::data*tmp, tmp = malloc(sizeof(Hashlmpl::data)), tmp → number = number, tmp → node = node, tmp → top_flag = true, tmp → next = hash[index]) in S400. Herein, HASH_DENOM parameter means maximum index value for designating table number in generation of hash tables.

Then, it is confirmed whether or not the index of the hash table is null (hash[index] == NULL ?) in S500. If the hash table index is null, indicating new node information, the flag of the previous top node is canceled (hash[index] → top_flag = false) in S600. If the hash table index is not null, a top flag is set and added (hash[index] = tmp) in S700.

As described above, the present invention provides an approach for calling information about an unregistered object instance through a representative object instance so that nodes can be positively managed even though there are many and various objects per class unregistered to the naming service such as configuration managed objects.

While the present invention has been shown and described in connection with the preferred embodiments, it will be apparent to those skilled in the art that modifications and variations can be made without departing from the spirit and scope of the invention as defined by the appended claims.

## Claims

1. An object management system using a representative object instance in a network, comprising:
an agent responsive to initialization of a managed system for storing initialization information about system configuration as object information, and for generating a representative object instance representing the object information;
said agent being responsive to receiving an object call from a network management system (NMS) manager for performing a command for a called object through the representative object instance, and for forwarding a result of the command to the NMS manager.

2. The object management system according to claim 1, wherein the agent includes:
an unregistered object DB storing unregistered object information of objects that are not registered in a naming service in use for inter-object communication;
an application program responsive to receiving an object call from the NMS manager for approaching the unregistered object DB through the representative object instance to perform the command for a called object; and
a system interface for interfacing with the managed system.

3. The object management system according to claim 2, wherein the application program comprises a user program that implements one of inter-object relation and motion defined by an Interface Definition Language (IDL).

4. The object management system according to claim 2, wherein the unregistered object information stored in the unregistered object DB comprises a structured linked list.

5. The object management system according to claim 4, wherein the unregistered object information contains configuration information stored in an Mo_Node and respective attribute information about the configuration information stored in an Mo_Attribute.

6. The object management system according to claim 2, wherein the initialization information comprises at least one of System information, Rack information, Shelf information, Slot information and Board information.

7. The object management system according to claim 6, wherein the System information is stored in the unregistered object DB according to attribute information defined as EquipmentR1 class.

8. The object management system according to claim 6, wherein the Rack information, the Shelf information and the Slot information are stored in the unregistered object DB according to attribute information defined as EquipmentHolder class.

9. The object management system according to claim 6, wherein the Board information is stored in the unregistered object DB according to attribute information defined as CircuitPack class.

10. The object management system according to claim 2, wherein the agent is responsive to receiving a GET operation command about the object information from the NMS manager for searching the unregistered object DB through the representative object instance, and for transmitting result information of the called object to the NMS manager.

11. The object management system according to claim 10, wherein the agent additionally registers the result information in a hash table.

12. The object management system according to claim 11, wherein the information registered in the hash table comprises a structured linked list.

13. The object management system according to claim 10, wherein the agent finds an instance satisfying filter conditions requested by the NMS manager from instances searched according to DN information during execution of the GET operation command.

14. The object management system according to claim 13, wherein the filter conditions comprise at least one of calculation conditions, comparison conditions and containment conditions.

15. The object management system according to claim 10, wherein the agent, when making a command in the execution of the GET operation command, designates a range to be searched and a representative object instance according to scope information.

16. The object management system according to claim 15, wherein the scope information comprises at least one of type information and level information.

17. The object management system according to claim 2, wherein the agent is responsive to receiving a SET operation command about the object information from the NMS manager for searching the unregistered object DB through the representative object instance, for changing information about the called object, and for transmitting changed result information to the NMS manager.

18. The object management system according to claim 17, wherein the agent additionally registers the changed result information in a hash table.

19. The object management system according to claim 17, wherein the agent is responsive to one of malfunction and status change of the managed system for changing information of a corresponding object and for transmitting the changed information to the NMS manager through an event.

20. An object management agent system using a representative object instance in a network, comprising:
an unregistered object DB for storing unregistered object information of objects that are not registered in a naming service in use for inter-object communication;
an application program responsive to receiving an object call from a network management system (NMS) manager for approaching the unregistered object DB through the representative object instance to perform a command for a called object; and
a system interface for interfacing with a managed system.

21. The object management agent system according to claim 20, wherein the application program comprises a user program that implements an inter-object relation and a motion defined by an Interface Definition Language (IDL).

22. The object management agent system according to claim 20, wherein the unregistered object information stored in the unregistered object DB comprises a structured linked list.

23. The object management agent system according to claim 22, wherein the unregistered object information contains configuration information stored in an Mo_Node and respective attribute information about the configuration information stored in an Mo_Attribute.

24. An object management method using a representative object instance in a network, the method comprising the steps of:
storing initialization information about managed system configuration as object information;
generating a representative object instance representing the object information; and
upon receiving an object call, forwarding a result value according to a command about an object called through the representative object instance.

25. The object management method according to claim 24, wherein the initialization information comprises at least one of System information, Rack information, Shelf information, Slot information and Board information.

26. The object management method according to claim 25, wherein the System information is stored according to attribute information defined as EquipmentR1 class.

27. The object management method according to claim 25, wherein the Rack information, the Shelf information and the Slot information are stored according to attribute information defined as EquipmentHolder class.

28. The object management method according to claim 25, wherein the Board information is stored according to attribute information defined as CircuitPack class.

29. The object management method according to claim 24, wherein the object information is stored in the form of a structured linked list.

30. The object management method according to claim 24, wherein the unregistered object information contains configuration information stored in an Mo_Node and respective attribute information about the configuration information stored in an Mo_Attribute.

31. The object management method according to claim 24, further comprising the step of:
when the command about the object called through the representative object instance is a GET command, forwarding a GET result.

32. The object management method according to claim 31, wherein the step of forwarding the GET result comprises:
inquiring of an object related to the representative object instance;
storing a GET result of the inquired object; and
forwarding the GET result of the inquired object.

33. The object management method according to claim 32, further comprising the step of adding the inquired object information to a hash table after forwarding the GET result of the inquired object.

34. The object management method according to claim 24, further comprising the step of:
when the command about the object called through the representative object instance is a SET command, forwarding a SET result.

35. The object management method according to claim 34, wherein the step of forwarding the SET result comprises:
inquiring of an object related to the representative object instance;
changing an attribute value of the inquired object;
forwarding the changed attribute value; and
forwarding the SET result of the inquired object.

36. The object management method according to claim 35, further comprising the step of adding the inquired object information to a hash table after forwarding the changed attribute value.
